(19) Europäisches Patentamt

**European Patent Office**

**Office européen des brevets**

(11) Numéro de publication: **0 373 055 B1**

(12) **FASCICULE DE BREVET EUROPEEN**

(45) Date de publication de fascicule du brevet: **09.03.94** (51) Int. Cl.⁵: **B23K 26/06**, G02B 27/00

(21) Numéro de dépôt: **89403344.8**

(22) Date de dépôt: **01.12.89**

(54) **Dispositif pour le traitement d'une surface par balayage d'un faisceau laser.**

(30) Priorité: **05.12.88 FR 8815896**

(43) Date de publication de la demande:
**13.06.90 Bulletin 90/24**

(45) Mention de la délivrance du brevet:
**09.03.94 Bulletin 94/10**

(84) Etats contractants désignés:
**BE CH DE GB IT LI NL SE**

(56) Documents cités:
**DD-A- 157 685**

(73) Titulaire: **COMMISSARIAT A L'ENERGIE ATO-
MIQUE
31/33, rue de la Fédération
F-75015 Paris Cédex 15(FR)**

(72) Inventeur: **Achard, Hervé
1 Place Doyen Gosse
F-38000 Grenoble(FR)**
Inventeur: **Bono, Hubert
La Rivoire
F-38960 Saint Etienne de Crossey(FR)**
Inventeur: **Joly, Jean-Pierre
22 Place Salvador Allendé
F-38120 Saint Egrève(FR)**
Inventeur: **Mermet, Jean-Luc
10, Rue Charles Ferré
F-38400 Saint Martin D'Héres(FR)**

(74) Mandataire: **Mongrédien, André et al
c/o BREVATOME
25, rue de Ponthieu
F-75008 Paris (FR)**

EP 0 373 055 B1

Rank Xerox (UK) Business Services
(3.10/3.09/3.3.3)

**Description**

La présente invention a pour objet un dispositif pour le traitement d'une surface par balayage d'un faisceau laser. Elle s'applique notamment en métallurgie et en microélectronique.

Plusieurs dispositifs connus utilisent un faisceau laser lors du traitement d'une surface, pour la faire fondre ou la recristalliser par exemple. Pour obtenir les meilleurs résultats, le mode transverse du laser, usuellement TEMOO, est modifié pour obtenir une tache allongée, de plus grande longueur possible tout en gardant une densité de puissance élevée.

Pour obtenir une telle tache, on connaît un premier dispositif qui utilise un agrandisseur afocal cylindrique. Un laser délivre un faisceau dont le mode transverse est TEMOO, c'est-à-dire de répartition d'énergie gaussienne sur la section du faisceau. La traversée de l'agrandisseur afocal cylindrique transforme la section circulaire du faisceau gaussien en section elliptique.

Le faisceau transformé est parallèle ; il est focalisé sur la surface à traiter par un objectif. Dans le plan focal de cet objectif, l'image du faisceau est une tache elliptique dont le rapport d'ellipticité est égal au grandissement de l'agrandisseur afocal cylindrique.

Les dimensions de la tache déterminées par la seule diffraction sont données par :

$$d = (4\lambda F)/(\pi k w)$$
$$D = (4\lambda F)/(\pi w)$$

Avec :
- $d$ : petit axe de l'ellipse,
- $D$ : grand axe de l'ellipse,
- $\lambda$ : longueur d'onde du laser,
- $F$ : focale de l'objectif,
- $k$ : grandissement afocal cylindrique,
- $w$ : diamètre du faisceau du laser.

Le rapport d'ellipticité $D/d$ est égal à $k$, grandissement afocal cylindrique.

Le rapport d'ellipticité est donc limité par le diamètre de la pupille d'entrée de l'objectif, puisqu'agrandir le faisceau à des dimensions supérieures à ce diamètre est inutile : une certaine quantité de lumière ne serait pas focalisée par l'objectif et donc perdue. On obtient ainsi des rapports d'ellipticité au maximum égaux à environ 10, ce qui représente un premier inconvénient de ce dispositif.

D'autre part, ce dispositif ne présente pas une grande souplesse d'utilisation : la modification du rapport d'ellipticité (dans la limite signalée plus haut) implique le remplacement de l'agrandisseur afocal et la reconfiguration de toute la chaîne optique utilisée pour le traitement d'une surface.

Un autre inconvénient de ce dispositif réside dans le fait que pour multiplier par un facteur X le grand axe de l'ellipse, il faut réduire du même facteur le diamètre w du faisceau incident et d'un facteur $X^2$ sa surface.

Par ailleurs, pour conserver la même densité de puissance dans l'ellipse agrandie (par réduction de w), il faut multiplier la puissance incidente par le facteur X.

La puissance par unité de surface à l'entrée de l'agrandisseur afocal cylindrique est donc affectée d'un facteur $X^3$. Sous l'action des densités de puissance importantes mises en jeu, les optiques utilisées se détériorent rapidement.

Un autre inconvénient de ce dispositif concerne la correction des aberrations optiques de l'agrandisseur afocal cylindrique. Ces dernières affectent plus particulièrement le petit axe de l'ellipse.

On connaît la difficulté de corriger les aberrations chromatiques et autres sur des lentilles d'un agrandisseur afocal cylindrique, lentilles traitées par ailleurs pour résister à de grandes densités de puissance.

Un autre inconvénient de ce dispositif résulte de tous les inconvénients déjà cités : toutes les contraintes imposées pour réaliser le dispositif impliquent un coût important.

On connaît un second dispositif qui permet d'obtenir une tache lumineuse allongée avec une densité de puissance suffisante pour le traitement d'une surface. Ce dispositif consiste en un laser dont le mode transverse est TEM01. Pour cela on adapte la configuration des miroirs constituant la cavité du laser.

Les lasers dont le mode transverse est TEM00 et TEM01 sont décrits dans l'article "Review of Laser Modes" de C. Breck Hitz, Laser and Applications, November 1985, p. 79-82.

On connaît enfin d'après le document DD-A-157 685 un dispositif de formation d'un rayon pour l'usinage de matériaux avec un laser. Ce dispositif comprend un télescope formé d'un oculaire et d'un objectif, une série de prismes de Wollaston et de plaques retardatrices quart-d'ondes et une lentille sphérique de focalisation. Ce dispositif ne permet toutefois d'obtenir qu'un trait continu, formé de petits points elliptiques dont le grand axe de l'ellipse est horizontal. En conséquence, le trait obtenu présente une distribution de l'intensité non uniforme.

La figure 1 représente schématiquement l'allure de la tache obtenue. Son allure ressemble à un haricot ou une ellipse déformée. Elle présente une plus grande longueur selon l'axe a.

La figure 2 représente schématiquement le profil d'intensité selon l'axe a du faisceau obtenu par ce dispositif. L'ordonnée I représente l'intensité lumineuse en unité arbitraire. La distribution d'intensité suivant a présente deux maxima : le profil est en forme de "dos de chameau".

Cette tache est focalisée par un objectif sur la surface à traiter ; cette opération conserve le profil d'intensité.

Ce dispositif présente plusieurs inconvénients. La distribution d'intensité lumineuse à l'intérieur de la tache présente deux maxima, ce qui est néfaste pour certaines applications qui nécessitent une distribution d'intensité la plus uniforme possible (le recuit par exemple).

Le rapport d'ellipticité qui peut être calculé en assimilant l'allure de la tache obtenue à une ellipse, est inférieur ou égal à 2. Ceci constitue une limite importante au dispositif.

De plus, le laser travaille sur un mode qui est moins stable que le mode fondamental. Cette instabilité provoque des fluctuations de puissance préjudiciable au traitement de la surface.

En dernier lieu, toute modification de l'allure de la tache entraîne un changement d'au moins un élément de la chaîne optique (un miroir de la cavité du laser par exemple).

On connaît un troisième dispositif qui utilise deux faisceaux lasers mélangés de manière à ne former qu'une tache allongée. Cette tache est constituée des deux taches circulaires de chacun des faisceaux. Sa distribution d'intensité selon sa plus grande longueur est semblable à celle représentée sur la figure 2 et déjà décrite.

Ce dispositif présente les inconvénients inhérents à la forme en "dos de chameau" du profil d'intensité. D'autre part, il nécessite la mise en oeuvre de deux lasers, appareils dont le réglage est délicat, d'autant plus que la puissance des deux faisceaux doit être identique et contrôlée avec une grande précision.

Ce dispositif est donc peu commode, de réglage mal aisé et coûteux.

Le but de la présente invention est de pallier ces inconvénients : obtenir une tache elliptique et dont le rapport d'ellipticité peut être réglé à volonté sans manipuler la chaîne optique du dispositif, ce rapport d'ellipticité pouvant atteindre des valeurs élevées.

Un autre but de l'invention est d'éviter de soumettre les différents éléments optiques du dispositif à de grandes densités de puissance.

Pour cela, l'invention préconise l'emploi d'un agrandisseur afocal sphérique couplé à un anamorphoseur cylindrique.

De façon plus précise, la présente invention concerne un dispositif pour le traitement d'une surface par balayage d'un faisceau laser comprenant un laser, une chaîne de transformation d'un faisceau laser, un système de balayage d'un faisceau laser, une optique de focalisation. Ladite chaîne de transformation comporte :

- un agrandisseur afocal sphérique,
- un anamorphoseur cylindrique.

L'agrandisseur afocal sphérique placé à la sortie d'un laser délivrant un faisceau gaussien permet d'agrandir le diamètre de la section de ce faisceau tout en conservant ce dernier sensiblement parallèle. De cette manière, tous les éléments optiques placés après l'agrandisseur n'ont pas à supporter de fortes densités de puissance.

L'anamorphoseur cylindrique permet la transformation du faisceau gaussien issu du laser en un faisceau à vergence modulable sur un seul axe.

Selon une variante de réalisation, l'anamorphoseur cylindrique possède un grandissement variable à volonté selon un axe. Il permet de régler l'ellipticité dé la tache lumineuse focalisée sur le substrat en faisant varier son grand axe sans modifier le petit axe. Ainsi, on évite de lourdes manipulations et des remplacements d'éléments optiques lorsqu'on veut changer les dimensions de la tache lumineuse.

Dans un mode de réalisation préféré, l'anamorphoseur cylindrique comprend une lentille cylindrique plan-convexe et une lentille cylindrique plan-concave.

Selon une variante de réalisation, l'anamorphoseur cylindrique comprend un miroir cylindrique concave et un miroir cylindrique convexe.

Selon une autre variante de réalisation, l'anamorphoseur cylindrique comporte un miroir cylindrique convexe et une lentille cylindrique plan-concave.

Selon une autre variante de réalisation l'anamorphoseur cylindrique comprend une lentille cylindrique plan-convexe et un miroir cylindrique concave.

Selon un mode préféré de réalisation, la chaîne de transformation, le système de balayage et l'optique de focalisation sont achromatisés aux longueurs d'onde du faisceau laser utilisé.

Selon un mode préféré de réalisation, les deux éléments optiques composant l'anamorphoseur cylindrique présentent l'un, une concavité, l'autre, une convexité, la concavité et la convexité étant complémentaires.

Selon un mode préféré de réalisation, le système de balayage comporte au moins un miroir oscillant.

Selon un mode préféré de réalisation, le dispositif selon l'invention comprend en outre :

- une enceinte dans laquelle règne un gaz inerte chimiquement ou réactif selon le traitement de surface envisagé, cette enceinte étant munie d'un hublot transparent audit faisceau laser utilisé pour traiter la surface,
- dans cette enceinte, un support chauffant apte à recevoir un matériau possédant une face à traiter,

- un sas de chargement relié à l'enceinte par une ouverture fermée par un clapet, ce sas comportant en son intérieur un bras mobile apte à recevoir ledit matériau et pouvant être actionné de l'extérieur du sas, ce bras étant apte à introduire ledit matériau à l'intérieur de l'enceinte et à mettre en place ledit matériau sur le support.

Selon une variante de réalisation du dispositif, le support chauffant est fixé sur une première platine mobile selon une première direction D1 et solidaire d'une seconde platine mobile selon une seconde direction D2 perpendiculaire à la première.

Les caractéristiques et avantages de l'invention apparaîtront mieux après la description qui suit donnée à titre explicatif et nullement limitatif. Cette description se réfère à des dessins annexés sur lesquels :

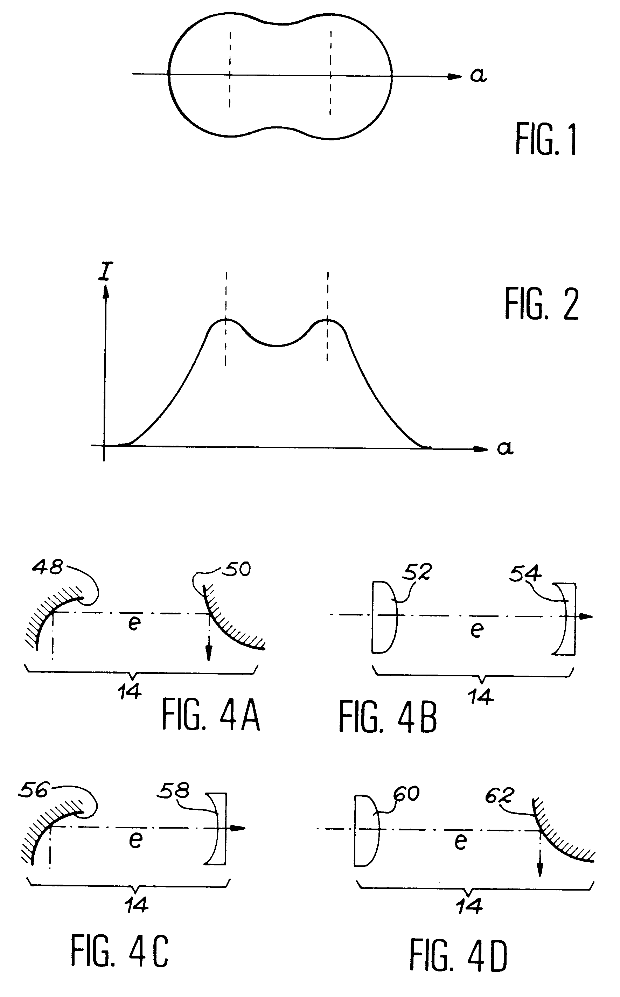

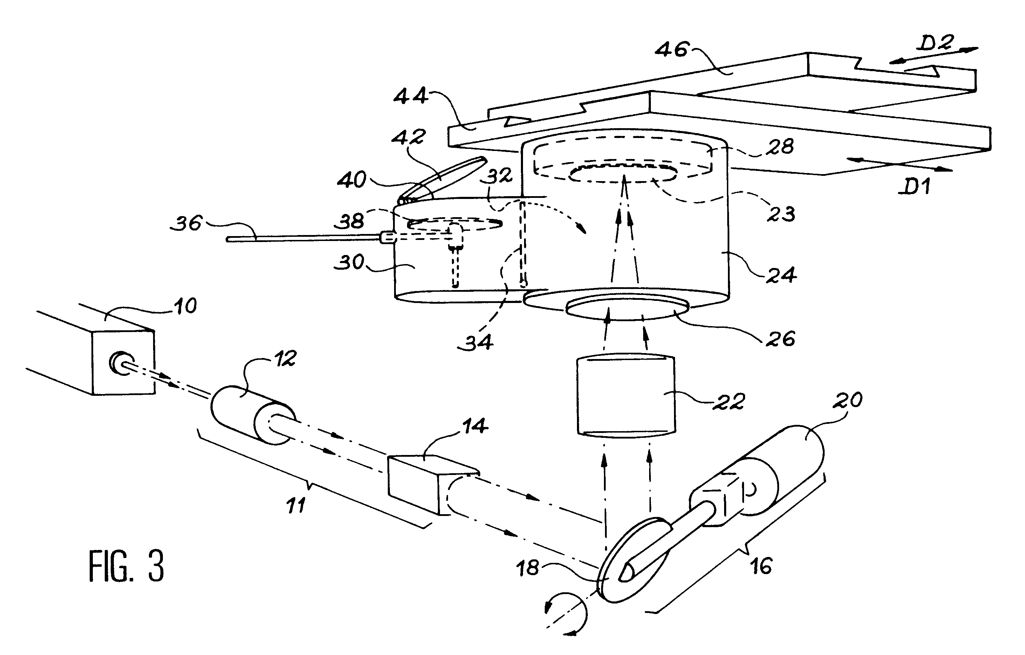

- la figure 1, déjà décrite, représente schématiquement la section d' un faisceau lumineux issu d'un dispositif selon l'art antérieur,
- la figure 2, déjà décrite, représente schématiquement le profil d'intensité selon un axe a d'un faisceau lumineux issu d'un dispositif selon l'art antérieur,
- la figure 3 représente schématiquement un dispositif selon l'invention,
- les figures 4A et 4D représentent schématiquement, en coupe, différents modes de réalisation des éléments optiques d'un anamorphoseur cylindrique,

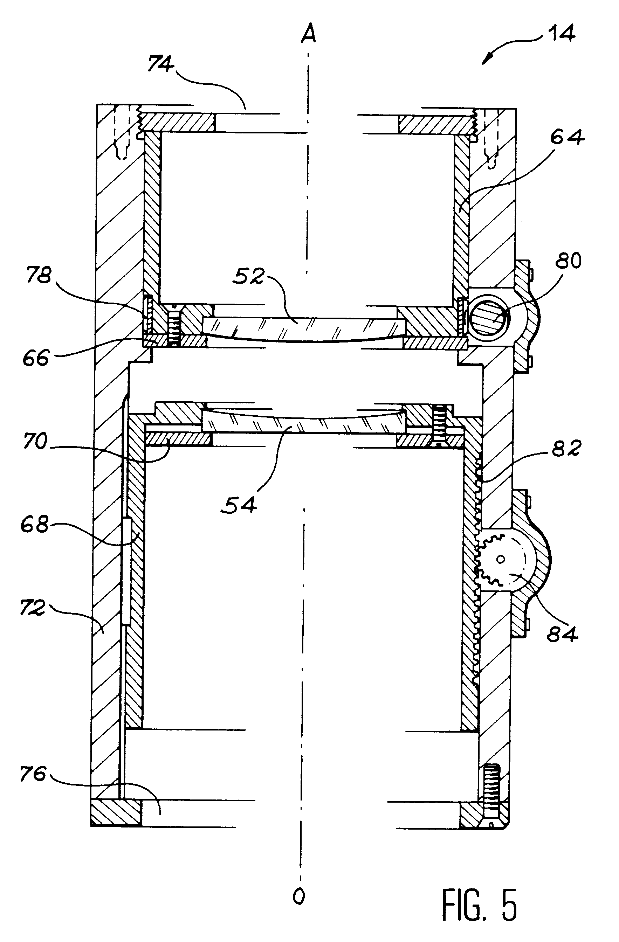

- la figure 5 représente schématiquement et en coupe, un anamorphoseur cylindrique.

La figure 3 représente schématiquement un dispositif selon l'invention.

Un laser 10, délivre un faisceau gaussien. Ce peut être un laser à argon ionisé délivrant un faisceau continu de 20 W en multi-raies par exemple. Selon le type de traitement de surface désiré, et les puissances à mettre en jeu, on peut aussi utiliser un laser à $CO_2$ par exemple. Le faisceau traverse ensuite une chaîne de transformation 11 comprenant un agrandisseur afocal sphérique 12 et un anamorphoseur cylindrique 14. L'agrandisseur afocal sphérique 12 présente un grandissement g. Ce grandissement g peut être égal à 9,3 par exemple.

Le faisceau agrandi traverse un anamorphoseur cylindrique 14. La vergence initialement isotrope devient anisotrope. Ainsi, par action sur l'anamorphoseur 14, le rapport d'ellipticité de la tache focalisée est réglable à volonté, comme on le verra plus loin.

A la sortie de l'anamorphoseur, le faisceau tombe sur le système de balayage 16. Ce système de balayage 16 comporte de manière préférée un miroir oscillant 18 actionné par un moteur 20.

Le faisceau animé d'un mouvement de balayage traverse une optique de focalisation 22.

Préférentiellement, cette optique de focalisation 22 est un objectif à champ plat. Ce dernier peut présenter une distance focale de 225 mm, une ouverture de 24 mm et un champ de 125 mm dans son plan focal, par exemple. Un objectif à champ plat permet un balayage sur un champ important sans défocalisation.

Tous les éléments optiques (chaîne de transformation 11, système de balayage 16, optique de focalisation 22) sont achromatisés pour les longueurs d'onde d'utilisation du dispositif (488 et 514,5 nm pour l'argon, 10 600 nm pour le $CO_2$).

Le matériau 23 ayant une face à traiter est placé dans une enceinte 24, à l'intérieur de laquelle règne une atmosphère d'un gaz inerte. Ce gaz peut être de l'azote par exemple. La pression à l'intérieur de l'enceinte peut être de quelques torrs par exemple.

L'enceinte est munie d'un hublot 26 transparent aux longueurs d'onde d'utilisation.

Le matériau 23 est maintenu par exemple par dépression sur un support chauffant 28, la face à traiter en vis-à-vis du hublot 26. La température à laquelle est porté le support 28 dépend de l'utilisation envisagée ; elle peut être de 800°C par exemple.

Le matériau 23 est introduit dans l'enceinte 24 par l'intermédiaire d'un sas de chargement 30, puisqu'il règne dans l'enceinte 24 une atmosphère d'azote.

Une ouverture 32 fermée de manière étanche par un clapet 34 relie l'enceinte 24 au sas 30.

Ce dernier est muni, en son intérieur, d'un bras mobile 36 apte à recevoir ledit matériau 23 et pouvant être actionné de l'extérieur du sas 30. Le bras 36 comprend un plateau 38 par exemple.

Le matériau 23 est introduit dans le sas 30 par une ouverture 40 et déposé sur le plateau 38. L'ouverture 40 est fermée par une porte 42 qui garantit l'isolement du sas 30 avec l'extérieur.

Le bras 36 introduit le matériau 23 dans l'enceinte 24 par l'ouverture 32 en repoussant le clapet 34. Le matériau 23 est positionné sur le support 28 et maintenu par dépression. Le bras 36 est ensuite repositionné dans le sas 30.

Pour augmenter la rapidité du balayage, le support 28 est fixé sur une première platine 44 mobile selon une première direction D1. Cette platine 44 est solidaire d'une seconde platine 46 mobile selon une seconde direction D2 perpendiculaire à la première D1.

Le faisceau elliptique, après avoir traversé l'objectif 22 traverse le hublot 26 et balaye la surface à traiter.

L'optique de l'anamorphoseur cylindrique 14 peut être réalisée de différentes façons. Les figures 4A à 4D illustrent schématiquement quatre modes de réalisation.

La figure 4A représente schématiquement un premier arrangement optique catoptrique réalisant un anamorphoseur cylindrique. Ce dernier est constitué d'un miroir cylindrique convexe 48 séparé par une distance e d'un miroir cylindrique concave 50.

Le faisceau gaussien se réfléchit d'abord sur le miroir 48 puis sur le miroir 50.

Préférentiellement, la concavité et la convexité des deux miroirs 50 et 48 sont complémentaires.

L'utilisation de deux miroirs permet de s'affranchir complètement des aberrations chromatiques et rend plus aisée la mise en oeuvre d'un dispositif utilisant un laser 10 de très forte puissance.

La variation du rapport d'ellipticité est obtenue en faisant varier la distance e. L'encombrement des miroirs 48, 50 limite la réduction de la distance e. Cette distance est proportionnelle au rapport d'ellipticité.

Le montage dioptrique représenté schématiquement en coupe sur la figure 4B est beaucoup plus souple car il permet de faire varier la distance e de 0 à l'infini (en pratique, on se limite à une distance e au maximum égale à 35 mm par exemple).

Ce mode préféré de réalisation est constitué par une lentille cylindrique plan-convexe 52 et une lentille cylindrique plan-concave 54. Le faisceau, à la sortie de l'agrandisseur afocal sphérique 12, traverse d'abord la lentille 52 puis la lentille 54.

Préférentiellement, la convexité et la concavité des deux lentilles 52 et 54 sont complémentaires.

Les figures 4C et 4D représentent schématiquement et en coupe des montages optiques catadioptriques réalisant l'anamorphoseur cylindrique.

Le montage de la figure 4C est constitué par un miroir cylindrique convexe 56 et d'une lentille cylindrique plan-concave 58. Le faisceau se réfléchit d'abord sur le miroir 56 puis traverse la lentille 58.

Le miroir 56 et la lentille 58 sont séparés par une distance e réglable à volonté et proportionnelle au rapport d'ellipticité du faisceau obtenu en sortie du montage 14.

Le montage de la figure 4D est constitué par une lentille cylindrique plan-convexe 60 et par un miroir cylindrique concave 62. Le faisceau à la sortie de l'agrandisseur afocal sphérique traverse la lentille 60 puis se réfléchit sur le miroir 62.

Les deux éléments 60 et 62 sont séparés par une distance e réglable à volonté et proportionnelle au rapport d'ellipticité du faisceau obtenu en sortie du montage en 23.

Préférentiellement, pour ces deux derniers modes de réalisation, les éléments convexes sont complémentaires des éléments concaves.

Pour tous ces modes de réalisation, les dimensions de la tache elliptique au point focal du système de focalisation 22 sont données approximativement par :

$$d = (4\lambda F)/(\pi kw)$$
$$D = (kwFe)/(f^2) \text{ pour } e > o$$

avec :

d :  petit axe de l'ellipse,
D :  grand axe de l'ellipse,
$\lambda$ :  longueur d'onde du laser,
F :  focale du système de focalisation 22,
k :  grandissement de l'agrandisseur afocal sphérique 12,
w :  diamètre du faisceau laser (à la sortie du laser),
e :  distance entre les éléments optiques composant l'anamorphoseur cylindrique 14,
f :  focale des éléments optiques composant l'anamorphoseur cylindrique 14.

Dans chacun des modes de réalisation décrits par les figures 4A à 4D, la focale de chacun des éléments optiques 48, 50, 52, 54, 56, 58, 60, 62, composant l'anamorphoseur cylindrique 14 est choisie identique et égale à f. f peut être égale à 301 mm par exemple.

La distance e peut varier de zéro à l'infini. Dans un exemple de réalisation, on limite les variations de e à la gamme allant de 5 mm à 35 mm.

Dans un exemple de réalisation, le diamètre du faisceau w est choisi égal à 1,9 mm (ce diamètre correspond à une intensité de $1/e^2$ fois l'intensité au centre du faisceau gaussien à la sortie du laser 10).

Le grandissement k de l'agrandisseur afocal sphérique 12 peut être égal à environ 9 par exemple.

La focale F du système de focalisation 22 peut être égale à 225 mm par exemple.

Ces valeurs conduisent à une tache elliptique dont le petit axe d est environ égal à 10 micromètres et le grand axe peut aller de 220 à 1540 micromètres.

Le rapport d'ellipticité est donc égal à :

$$D/d = (\pi k^2 w^2 e)/(f^2 4\lambda)$$

Cette relation précise la constante de proportionnalité existant entre le rapport d'ellipticité et la distance e.

Pour les valeurs ci-dessus prises à titre illustratif et non limitatif, le rapport d'ellipticité D/d peut aller de 22 à 154.

Pour un bon fonctionnement du dispositif, la déformation géométrique du front d'onde à la sortie de chaque composant optique du dispositif de balayage doit être inférieure au quart de la longueur d'onde. Ainsi, les aberrations géométriques sont négligeables.

On voit sur la figure 5 une coupe représentée schématiquement d'un anamorphoseur cylindrique 14 utilisable dans un dispositif conforme à l'invention.

Les éléments optiques sont constitués, conformément au schéma de la figure 4B par deux lentilles 52, 54 cylindriques, l'une 52 plan-convexe, l'autre 54 plan-concave. Ces deux lentilles 52, 54 sont complémentaires l'une de l'autre.

La lentille 52 est maintenue dans un logement aménagé dans un support 64 par une pièce de maintien 66 fixée sur le support 64.

La lentille 54 est maintenue dans un logement aménagé dans un support 68 par une pièce de maintien 70 fixée sur le support 68.

La convexité de la lentille 52 fait face à la concavité de la lentille 54.

Les supports 64 et 68 sont contenus dans un corps principal 72 cylindrique dans lequel sont aménagées à ses extrémités, deux ouvertures 74 et 76 centrées sur l'axe optique AO du dispositif.

L'ouverture 74 permet l'introduction du faisceau gaussien à l'intérieur de l'anamorphoseur 14, tandis que l'ouverture 76 permet la sortie du faisceau.

Les supports 64 et 68 présentent bien entendu des ouvertures laissant libre la propagation du faisceau.

Le support 64 peut effectuer une rotation autour de l'axe AO. Une couronne dentée 78 fixée sur le support 64 associée à une vis sans fin 80 fixée sur le corps 72 permettent de contrôler cette rotation. Cette rotation permet d'assurer le parallélisme des génératrices des lentilles.

Le support 68 peut effectuer une tanslation suivant l'axe AO. Une crémaillère 82, fixée sur le support 68, associée à une vis sans fin 84 permettent de contrôler cette translation. Cette dernière permet d'écarter les deux lentilles 52, 54 de manière à faire varier le rapport d'ellipticité.

Par contre, la translation du support 64 et la rotation du support 68 sont interdites.

Pour obtenir le parallélisme des lentilles, on utilise un dispositif de réglage non représenté. Ce dispositif comprend une lunette autocollimatrice qui projette un faisceau issu de l'anamorphoseur 14 sur une surface dépolie.

Le réglage consiste à rendre l'ellipse obtenue la plus fine possible en agissant sur la vis 80 permettant la rotation du support 64 dans le corps principal 72.

Le parallélisme doit être conservé quel que soit l'écart entre les lentilles 52, 54.

Quelle que soit la variante de réalisation adoptée, un dispositif selon l'invention présente de nombreux avantages : le rapport d'ellipticité peut aller de 1 à une centaine et plus par la simple variation de e. Ce dispositif est donc très souple ; il permet d'adapter le rapport d'ellipticité à l'application souhaitée, de manière très rapide, sans modifier aucun autre réglage.

Pour augmenter le rapport d'ellipticité d'un facteur X et pour conserver la densité de puissance constante à l'intérieur du faisceau, il suffit de faire varier la distance e entre les deux lentilles 52, 54 d'un facteur X et de multiplier la puissance du faisceau issu du laser 10 par un facteur X.

La dimension du petit axe d de la tache est indépendante de e ; la densité de puissance à l'entrée du dispositif n'est donc affectée que d'un facteur X.

De toute façon, seule la face d'entrée de l'agrandisseur afocal sphérique 12 est soumise à de fortes densités de puissance. Les autres éléments de la chaîne optique sont ainsi protégés.

En cas de détérioration, cette face d'entrée est beaucoup plus facile à réaliser que celle d'un agrandisseur cylindrique.

De tous ces avantages, il résulte que le dispositif selon l'invention ne nécessite pas de correction optique particulière et reste très peu coûteux.

Une application industrielle d'un dispositif selon l'invention peut être la réalisation de couches recristallisées de silicium en couche mince sur des oxydes de silicium déposés (structure "silicium sur isolant", SOI ou "silicon on insulator" en terminologie anglo-saxonne). Cette réalisation intervient dans la fabrication de circuits intégrés "trois dimensions".

Une autre application industrielle d'un dispositif selon l'invention est un traitement utilisé en métallurgie : l'amorphisation de surface.

**Revendications**

1. Dispositif pour le traitement d'une surface par balayage d'un faisceau laser comprenant au moins un laser (10), une chaîne de transformation d'un faisceau laser (11), un système de balayage d'un faisceau laser (16), une optique de focalisation (22), caractérisé en ce que la chaîne de transformation comporte :
   - un anamorphoseur cylindrique (14).

2. Dispositif selon la revendication 1, caractérisé en ce qu'il comporte en outre :
   un agrandisseur afocal sphérique (12) pour l'agrandissement d'un faisceau avant sa pénétration dans ledit anamorphoseur cylindrique.

3. Dispositif selon la revendication 1, caractérisé en ce que l'anamorphoseur cylindrique (14) possède un grandissement variable à volonté selon un axe.

4. Dispositif selon la revendication 1, caractérisé en ce que l'anamorphoseur cylindrique (14) comprend deux éléments optiques : une lentille cylindrique plan-convexe (52) et une lentille cylindrique plan-concave (54).

5. Dispositif selon la revendication 1, caractérisé en ce que l'anamorphoseur cylindrique (14) comprend deux éléments optiques : un miroir cylindrique convexe (48) et un miroir cylindrique concave (50).

6. Dispositif selon la revendication 1, caractérisé en ce que l'anamorphoseur cylindrique (14) comprend deux éléments optiques : une lentille cylindrique plan-convexe (60) et un miroir cylindrique concave (62).

7. Dispositif selon la revendication 1, caractérisé en ce que l'anamorphoseur cylindrique comprend deux éléments optiques : un miroir cylindrique convexe (56) et une lentille cylindrique plan-concave (58).

8. Dispositif selon l'une quelconque des revendications 4 à 7, caractérisé en ce que les éléments composant l'anamorphoseur cylindrique (14) étant l'un convexe, l'autre concave, la convexité et la concavité des éléments sont complémentaires l'une de l'autre.

9. Dispositif selon la revendication 1, caractérisé en ce que la chaîne de transformation (11), le système de balayage (16) et l'optique de focalisation (22) sont achromatisés aux longueurs d'onde du faisceau laser utilisé.

10. Dispositif selon la revendication 1, caractérisé en ce que le système de balayage (16) comporte au moins un miroir oscillant (18).

11. Dispositif selon la revendication 1, caractérisé en ce qu'il comprend en outre :
    - une enceinte (24) dans laquelle règne un gaz, cette enceinte (24) étant munie d'un hublot (26) transparent audit faisceau laser,
    - dans cette enceinte (24), un support chauffant (28) apte à recevoir un matériau (23) possédant une face à traiter,
    - un sas de chargement (30) relié à l'enceinte (24) par une ouverture (32) fermée par un clapet (34), ce sas (30) comportant en son intérieur un bras mobile (36) apte à recevoir ledit matériau (23) et pouvant être actionné de l'extérieur du sas (30), ce bras (36) étant apte à introduire ledit matériau (23) à l'intérieur de l'enceinte (24) et de mettre en place ledit matériau (23) sur le support (28).

12. Dispositif selon la revendication 11, caractérisé en ce que le support chauffant (28) est fixé sur une première platine (44) mobile selon une première direction D1 et solidaire d'une seconde platine (46) mobile selon une seconde direction D2 perpendiculaire à la première.

**Claims**

1. Device for the treatment of a surface by laser beam scanning using at least one laser (10), a laser beam transformation chain (11), a laser beam scanning system (16) and a focusing optics (22), characterized in that the transformation chain incorporates a cylindrical anamorphotic attachment (14).

2. Device according to claim 1, characterized in that it also incorporates a spherical afocal magnifier (12) for the magnification of a beam prior to its entry in said cylindrical anamorphotic attachment.

3. Device according to claim 1, characterized in that the cylindrical anamorphotic attachment (14) has a randomly variable magnification along one axis.

4. Device according to claim 1, characterized in that the cylindrical anamorphotic attachment (14) comprises two optical elements, namely a plano-convex cylindrical lens (52) and a plano-concave cylindrical lens (54).

5. Device according to claim 1, characterized in that the cylindrical anamorphotic attachment (14) comprises two optical elements, namely a convex cylindrical mirror (48) and a concave cylindrical mirror (50).

6. Device according to claim 1, characterized in that the cylindrical anamorphotic attachment (14) comprises two optical elements namely a plano-convex cylindrical lens (60) and a concave cylindrical mirror (62).

7. Device according to claim 1, characterized in that the cylindrical anamorphotic attachment comprises two optical elements, namely a convex cylindrical mirror (56) and a plano-concave cylindrical lens (58).

8. Device according to any one of the claims 4 to 7, characterized in that as the elements forming the cylindrical anamorphotic attachment (14) are in one case convex and in the other concave, the convexity and concavity of the elements are complementary of one another.

9. Device according to claim 1, characterized in that the transformation chain (11), scanning system (16) and focusing optics (22) are achromatized to the wavelengths of the laser beam used.

10. Device according to claim 1, characterized in that the scanning system (16) has at least one oscillating mirror (18).

11. Device according to claim 1, characterized in that it also comprises an enclosure (24) in which there is a gas, said enclosure (24) being provided with a shield window (26) transparent to the said laser beam; in said enclosure (24) a heating support (28) able to receive a material (23) having a face to be treated; and a loading lock (30) connected to the enclosure (24) by an opening (32) closed by a valve (34), said lock (30) having in its interior a mobile arm (36) able to receive said material (23) and which can be actuated from outside the lock (30), said arm (36) being able to introduce the material (23) into the enclosure (24) and to place the material (23) on support (28).

12. Device according to claim 11, characterized in that the heating support (28) is fixed to a first plate (44) moving in a first direction D1 and integral with a second plate (46) moving in a second direction D2 perpendicular to the first direction.

**Patentansprüche**

1. Vorrichtung für die Behandlung einer Oberfläche durch Abtasten bzw. Überstreichen mittels eines Laserstrahlbündels, enthaltend wenigstens einen Laser (10), eine Laserstrahl-Übertragungskette (11), ein Laserstrahl-Abtastsystem (16), eine Fokussierungsoptik (22), dadurch **gekennzeichnet**, daß die Übertragungskette umfaßt:
   - einen zylindrischen Vorsatz-Anamorphot (14).

2. Vorrichtung nach Anspruch 1, dadurch gekennzeichnet, daß sie außerdem umfaßt: einen sphärischen brennpunktlosen Vergrößerungsapparat (12) für die Vergrößerung eine Strahlenbündels vor seinem Eindringen in den genannten zylindrischen Vorsatz-Anamorphoten.

3. Vorrichtung nach Anspruch 1, dadurch gekennzeichnet, daß der zylindrische Vorsatz-Anamorphot (14) eine in einer Achse beliebig variierbare Vergrößerung besitzt.

4. Vorrichtung nach Anspruch 1, dadurch gekennzeichnet, daß der zylindrische Vorsatz-Anamorphot (14) zwei optische Elemente enthält: eine plan-konvexe zylindrische Linse (52) und eine plan-konkave zylindrische Linse (54).

5. Vorrichtung nach Anspruch 1, dadurch gekennzeichnet, daß der zylindrische Vorsatz-Anamorphot (14) zwei optische Elemente enthält: einen konvexen zylindrischen Spiegel (48) und einen konkaven zylindrische Spiegel (50).

6. Vorrichtung nach Anspruch 1, dadurch gekennzeichnet, daß der zylindrische Vorsatz-Anamorphot (14) zwei optische Elemente enthält: eine plan-konvexe zylindrische Linse (60) und einen konkaven zylindrischen Spiegel (62).

7. Vorrichtung nach Anspruch 1, dadurch gekennzeichnet, daß der zylindrische Vorsatz-Anamorphot (14) zwei optische Elemente enthält: einen konvexen zylindrischen Spiegel (56) und eine plan-konkave zylindrische Linse (58).

8. Vorrichtung nach einem der Ansprüche 4 bis 7, dadurch gekennzeichnet, daß von den Elementen, aus denen der zylindrische Vorsatz-Anamorphot (14) besteht, das eine konvex und das andere konkav ist, wobei die Konvexität und die Konkavität komplementär sind zueinander.

9. Vorrichtung nach Anspruch 1, dadurch gekennzeichnet, daß die Übertragungskette (11), das Abtastsystem (16) und die Fokussierungsoptik (22) achromatisch gemacht sind für die Wellenlängen des verwendeten Laserstrahls.

10. Vorrichtung nach Anspruch 1, dadurch gekennzeichnet, daß das Abtastsystem (16) wenigstens einen oszillierenden Spiegel (18) umfaßt.

11. Vorrichtung nach Anspruch 1, dadurch gekennzeichnet, daß sie außerdem umfaßt:
   - einen mit einem Gas gefüllten Behälter (24), wobei dieser Behälter (24) versehen ist mit einem für den genannten Laserstrahl durchlässigen Fenster (26),
   - in diesem Behälter (24) einen Heizträger (28) zur Aufnahme eines Materials (23) mit einer zu behandelnden Oberfläche,
- eine Lade-Schleusenkammer (30), verbunden mit dem Behälter (24) durch eine Öffnung (32), verschlossen durch ein Klappe (34), wobei diese Schleusenkammer (30) in ihrem Innern einen beweglichen Arm (36) enthält, der das genannten Material (23) aufnehmen und von außerhalb der Schleusenkammer (30) betätigt werden kann, wobei dieser Arm (36) in der Lage ist, das genannte Material (23) ins Innere des Behälters (24) einzuführen und das genannte Material (23) auf dem Träger (28) anzuordnen.

12. Vorrichtung nach Anspruch 11, dadurch gekennzeichnet, daß der Heizträger (28) auf einer ersten Platine (44) befestigt ist, beweglich in einer ersten Richtung D1 und fest verbunden mit einer zweiten Platine (46), beweglich in einer zweiten Richtung D2, senkrecht zur ersten.

FIG. 1

FIG. 2

FIG. 4A

FIG. 4B

FIG. 4C

FIG. 4D

FIG. 3

EP 0 373 055 B1

FIG. 5